# EUROPEAN PATENT SPECIFICATION

(11) **EP 4 527 140 B1**
(45) Date of publication and mention of the grant of the patent: **29.07.2026**
(21) Application number: 22730714.7
(22) Date of filing: 19.05.2022
(51) Int. Cl.: H04W 72/542, H04W 84/12, H04W 88/10, H04W 84/18, H04W 88/06

(54) **A METHOD OF PERFORMING SENSING MEASUREMENTS DURING A SENSING SESSION BETWEEN A FIRST MULTI-LINK DEVICE AND A SECOND MULTI-LINK DEVICE IN A WIRELESS COMMUNICATION NETWORK, AS WELL AS A CORRESPONDING MULTI-LINK DEVICE AND A COMPUTER PROGRAM PRODUCT**
VERFAHREN ZUR DURCHFÜHRUNG VON MESSUNGEN WÄHREND EINER MESSSITZUNG ZWISCHEN EINEM ERSTEN UND EINEM ZWEITEN MULTILINK-GERÄT, SOWIE EIN ENTSPRECHENDES MULTI-LINK-GERÄT UND EIN COMPUTERPROGRAMMPRODUKT
PROCÉDÉ DE RÉALISATION DE MESURES DE DÉTECTION PENDANT UNE SESSION DE DÉTECTION ENTRE UN PREMIER DISPOSITIF À LIAISONS MULTIPLES ET UN SECOND DISPOSITIF À LIAISONS MULTIPLES DANS UN RÉSEAU DE COMMUNICATION SANS FIL, DISPOSITIF À LIAISONS MULTIPLES CORRESPONDANT ET PRODUIT PROGRAMME D'ORDINATEUR

(43) Date of publication of application: 26.03.2025
(73) Proprietor: Telefonaktiebolaget LM Ericsson (publ), 164 83 Stockholm (SE)
(72) Inventor: LOPEZ, Miguel, 52074 Aachen (DE); WILHELMSSON, Leif, 222 20 Lund (SE)
(74) Representative: Ericsson
(86) International application number: PCT/EP2022/063536
(87) International publication number: WO 2023/222224

(56) References cited:
- EP-A1- 3 846 574
- WO-A1-2022/216086
- WO-A1-2022/245140
- KR-A- 20220 095 015
- US-A1- 2021 211 375
- US-A1- 2022 312 506
- INSUN JANG (LG ELECTRONICS): "Procedure of Sensing Measurement Setup", vol. 802.11bf, no. 3, 13 December 2021 (2021-12-13), pages 1 - 16, XP068187386, Retrieved from the Internet <URL:https://mentor.ieee.org/802.11/dcn/21/11-21-1735-03-00bf-procedure-of-sensing-measurement-setup.pptx> [retrieved on 20211213]
- YONGHO SEOK (MEDIATEK): "RTS and CTS Procedure in Synchronous Multi-link Operation", vol. 802.11 EHT; 802.11be, 13 April 2020 (2020-04-13), pages 1 - 20, XP068172748, Retrieved from the Internet <URL:https://mentor.ieee.org/802.11/dcn/20/11-20-0577-00-00be-rts-and-cts-procedure-in-synchronous-multi-link-operation.pptx> [retrieved on 20200413]
- LIANGXIAO XIN (SONY): "Channel Access for STR AP MLD with non-STR non-AP MLD", vol. 802.11 EHT; 802.11be, no. 4, 29 January 2021 (2021-01-29), pages 1 - 16, XP068176084, Retrieved from the Internet <URL:https://mentor.ieee.org/802.11/dcn/20/11-20-0974-04-00be-channel-access-for-str-ap-mld-with-non-str-non-ap-mld.pptx> [retrieved on 20210129]
- LIUMING LU (OPPO): "AP Assisted Multi-link Synchronous Transmission", vol. 802.11 EHT; 802.11be, 3 March 2021 (2021-03-03), pages 1 - 12, XP068178973, Retrieved from the Internet <URL:https://mentor.ieee.org/802.11/dcn/21/11-21-0361-00-00be-ap-assisted-multi-link-synchronous-transmission.pptx> [retrieved on 20210303]

## Description

### Technical field

The Institute of Electrical and Electronics Engineer (IEEE) working group 802.11 has initiated a task group (TG) 802.11bf that develops an amendment for wireless sensing. IEEE 802.11bf will define methods for exchanging IEEE 802.11 transmissions, also denoted as frames, between IEEE 802.11bf compliant devices, which are called stations, STAs. The exchanged frames enable STAs to sense their environment. With wireless sensing, STAs are capable to detect motion, the presence of human beings and pets, the position of doors, and potentially aspects like pulse rate and respiratory rate.

802.11bf introduces so-called "WLAN sensing procedures". Such procedures enable a STA to perform sensing and/or obtain measurement results. A WLAN sensing procedure comprises one or more of: sensing session setup, sensing measurement instance, sensing measurement setup termination, and sensing setup termination.

A STA that initiates a sensing procedure is called a sensing initiator, while a STA that participates in a sensing procedure started by an initiator is called a sensing responder. A sensing transmitter is a STA that transmits physical layer protocol data units, PPDUs, used for sensing measurements, and a sensing receiver is a STA that receives a PPDU transmitted by a sensing transmitter and performs measurements in a WLAN sensing procedure. A STA can have multiple roles in a WLAN sensing procedure. In a sensing session setup, the operational parameters associated with the sensing session are determined and exchanged among STAs.

When the sensing receiver is not consuming the measurements, it sends a sensing measurement report frame to report the measurements. A sensing measurement report frame comprises a measurement report field which carries channel state information, CSI, measurements obtained by a sensing receiver, and a control field that contains information describing how to interpret the measurement report field. Examples of information needed to interpret the CSI measurements include resolution, for example in bits, bandwidth and number of RX chains.

The next-generation amendment to the IEEE 802.11 Wi-Fi standard, which is currently under development, is IEEE 802.11be, also referred to as Extremely High Throughput (EHT). EHT introduces a new feature called multi-link, ML. In ML, a multi-link device, MLD, has multiple affiliated stations, STAs, each of which can communicate using independent wireless channels, also called wireless links. Communication over multiple links by an MLD is called multi-link operation, MLO. For example, an MLD can have two affiliated STAs - one communicating using channels in the 5 GHz frequency band and the other communicating using channels in the 6 GHz frequency band.

An MLD can use its affiliated STAs and corresponding supported channels to perform simultaneous transmit, TX, MLO, simultaneous receive, RX, MLO, or simultaneous transmit and receive, STR, MLO. This can help to improve the spectrum utilization, while also enhancing the system throughput and latency performance. Simultaneous TX and simultaneous RX MLOs may require that the involved links are synchronized to some extent, and this may put rather strict requirements while executing such MLOs. STR MLO, on the other hand, will not impose such requirements.

An AP MLD means an MLD with two or more affiliated access point, AP, STAs, whereas a non-AP MLD means an MLD with two or more affiliated non-AP STAs. An AP MLD can perform simultaneous downlink, DL, MLO or simultaneous uplink, UL, MLO involving non-AP STAs in its basic service set, BSS. Additionally, an AP MLD that can perform STR MLO can perform simultaneous DL and UL MLO wherein all types of frames can be independently transmitted or received on the supported channels.

One of the challenges related to wireless sensing is how to perform the wireless sensing as efficiently as possible.

US 2021/211375 A1 discloses a method and an apparatus for multi-link data transmission, where at a first MLD that supports a first link and a second link a first frame is transmitted during a first transmission opportunity on link1, and a second frame during a second transmission opportunity on link2, simultaneously to a second MLD. The first MLD receives a first response frame to the first frame transmitted on link1 after a transmission end time of the first frame. The first MLD identifies that a response frame to the second frame transmitted on link2 was not received after the transmission end time of the second frame. At the first MLD, a third frame is transmitted on link1 and a fourth frame on link2 simultaneously, after receiving the first response frame on link1.

INSUN JANG: "Procedure of Sensing Measurement Setup", IEEE DRAFT; 11-21-1735-03-00BF, vol. 802.11bf, no. 3 13 2021-12-13, pages 1-16, XP068187386 describes a procedure of sending measurement setup.

### Summary

It is an object of the present disclosure to provide for a method of performing sensing measurements during a sensing session between a first multi-link device and a second multi-link device in a Wireless Communication Network. It is a further object of the present disclosure to provide for a corresponding multi-link device as well as a corresponding computer program product.

In a first aspect, the invention provides a method according to claim 1.

The inventors have found that it may be beneficial if STAs comprised by a MLD coordinate and execute their sensing sessions. In prior art solutions, each STA would be responsible for setting up a sensing session, and for performing wireless sensing during a sensing session. The inventors have found that for MLDs this might be superfluous as, for example, overhead may be reduced when the STAs coordinate the sensing operations.

Wide bandwidths may be desirable for wireless sensing because they can provide better resolution which is useful to e.g. separate and identify multi-path components. For example, people standing in a room may give rise to multi-path components in a sensing transmission between a wireless transmitter and a receiver. Identification of these multi-path components could be used to detect human presence and estimate the number of people in the room. For this reason, multi-link operation may be well suited for wireless sensing, since the addition of wireless links increases the bandwidth used for sensing.

However, while it is feasible to setup sensing sessions for each link separately and perform sensing on each link independently, this may be wasting radio resources due to unnecessary duplication of overhead on each link and does not fully exploit the possibilities for sensing if performed in a coordinated manner among the affiliated STAs in an MLD.

The present application stipulates the above described insight in that the sensing session setup is performed over a first wireless link, using a first STA, and the sensing session is performed over a second wireless link, using a second STA. The sensing session is associated with the prior sensing session setup. The sensing session is triggered by the agreements that are made during the sensing session setup.

It is noted that the application clarifies that at least two links are involved in the sensing procedure. This includes a situation in which both, or in an example even more, links are utilized for the wireless sensing. In any case, at least two wireless links are involved in the wireless sensing process.

It may be beneficial, for example, to let one STA to be involved in the sensing session setup to make arrangements or to agree on wireless sensing procedures for all links available to the MLD. This would reduce messaging overhead.

In accordance with the present disclosure, two or more STA's may be affiliated with an MLD effectively meaning that the MLD is arranged to control these two or more STA's.

In accordance with the present disclosure, the STAs may comprise the physical layer (PHY) and the MAC layer functionalities of the OSI model. An MLD manages communication over multiple links and may support multiple MAC sublayers. A MAC sublayer may be further subdivided into an MLD upper MAC sublayer and an MLD lower MAC sublayer. In this case, the MLD upper MAC may perform functionalities that are common across all links, while an MLD lower MAC, corresponding to an affiliated STA, performs functionalities that are local to each link.

This is beneficial as the wireless sensing is performed over multiple links, for example over multiple links simultaneously, while the handshaking process is performed over one of those links. The handshaking process is the process in which the operational attributes for the sensing session are agreed upon.

The wireless sensing may then be performed over a relatively wide bandwidth, i.e. multiple wireless links, such that the results may be more accurate compared to when the wireless sensing is performed over just one wireless link.

In this context it is noted that the frequency bandwidths of both wireless links may overlap, but are not exactly the same. Preferably, both wireless links have distinct, different, frequencies.

In a further example, the method comprises the step of:
- transmitting, by said first multi-link device, during said sensing session, frames using said first STA of said first multi-link device over said first wireless link such that said first STA of said second multi-link device is able to perform sensing measurements using said frames.

The above described example is directed to the situation in which the first STA of the first multi-link device is transmitting the frames such that the second multi-link device is able to perform sensing measurements, and that the second STA of the first multi-link device is receiving frames from the second multi-link device such that the second STA of the first multi-link device is able to perform sensing measurement. In this case, the first STA and the second STA of the first multi-link device are thus operating in a transmitter and receiver mode, respectively.

In a further example, the method comprises the step of:
- receiving, by said first multi-link device, obtained sensing measurements by said second multi-link device, using said first STA of said first multi-link device over said first wireless link.

This particular example describes the situation in which the measurement results are received by the first multi-link device. The sensing measurements may, for example, comprise any of Channel State Information, CSI and Control field comprising information describing how to interpret said sensing measurements.

In wireless communications, channel state information may refer to channel properties of a wireless communication channel. This information describes how a signal propagates from the transmitter station to the receiver station and represents the combined effect of, for example, scattering, fading, and power decay with distance. The method to obtain knowledge of how a signal is impacted by the channel is called Channel estimation. Many different types of channel estimation exist, for example blind estimation or estimating the channel with a priori known reference symbols. The CSI may for example describe the channel in the frequency domain, by means of the amplitude and the phase for different frequency components of the channel, or the CSI may describe the channel by means of the channel impulse response.

The CSI makes it possible to adapt transmissions, from the transmitter station to the receiver station, to current channel conditions, which is beneficial for achieving reliable communication with high data rates in multiantenna systems. CSI may e.g. be estimated at the sensing receiver station and usually quantized and fed back, i.e. reported back, to the sensing transmitter station.

The control field may comprise a single bit, or a string, which indicates to the sensing transmitter station how to interpret the sensing measurements.

As an alternative, or in addition to the above, the method may comprise the step of reporting, by said first multi-link device, said obtained sensing measurements using said first STA of said first multi-link device over said first wireless link.

In another example, the step of performing comprises performing said wireless sensing substantially at the same time.

It is further noted that at least one of said first and second multi-link device is a multi-link single radio device.

In a second aspect of the invention, there is provided a first multi-link device as defined in claim 7. Communication Network are also applicable to the second aspect, being the first multi-link device arranged for performing sensing measurements during a sensing session between said first multi-link device and a second multi-link device in a Wireless Communication Network.

In an example, the first multi-link device further comprises:
- transmit equipment arranged for transmitting, during said sensing session, frames using said first STA of said first multi-link device over said first wireless link such that said first STA of said second multi-link device is able to perform sensing measurements using said frames.

In another example, the first multi-link device comprises:
- receive equipment arranged for receiving obtained sensing measurements by said second multi-link device, using said first STA of said first multi-link device over said first wireless link.

In an example first multi-link device further comprises:
- report equipment arranged for reporting said obtained sensing measurements using said first STA of said first multi-link device over said first wireless link.

In another example, the perform equipment is arranged for performing said wireless sensing substantially at the same time.

In an example, the first multi-link device is a multi-link single radio device.

In a third aspect of the invention, there is provided a computer program product comprising a computer readable medium having instructions stored thereon which, when executed by a multi-link device, causes said multi-link device to implement a method in accordance with any of the method examples as provided above.

The present disclosure is described in conjunction with the appended figures. It is emphasized that, in accordance with the standard practice in the industry, various features are not drawn to scale. In fact, the dimensions of the various features may be arbitrarily increased or reduced for clarity of discussion.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

The above and other aspects of the disclosure will be apparent from and elucidated with reference to the examples described hereinafter.

### Brief description of the figures

Fig. 1 discloses an example in which wireless sensing is performed between two multi-link devices.
Fig. 2 discloses an example of an architecture in accordance with the present disclosure;
Fig. 3 discloses an example of a multi-link device in accordance with the present disclosure.

### Detailed description

It is noted that in the description of the figures, same reference numerals refer to the same or similar components performing a same or essentially similar function.

A more detailed description is made with reference to particular examples, some of which are illustrated in the appended drawings, such that the features of the present disclosure may be understood in more detail. It is noted that the drawings only illustrate typical examples and are therefore not to be considered to limit the scope of the subject matter of the claims. The drawings are incorporated for facilitating an understanding of the disclosure and are thus not necessarily drawn to scale. Advantages of the subject matter as claimed will become apparent to those skilled in the art upon reading the description in conjunction with the accompanying drawings.

The ensuing description above provides preferred exemplary embodiment(s) only, and is not intended to limit the scope, applicability, or configuration of the disclosure. Rather, the ensuing description of the preferred exemplary embodiment(s) will provide those skilled in the art with an enabling description for implementing a preferred exemplary embodiment of the disclosure, it being understood that various changes may be made in the function and arrangement of elements, including combinations of features from different embodiments, without departing from the scope of the disclosure.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, electromagnetic, or a combination thereof. Additionally, the words "herein," "above," "below," and words of similar import, when used in this application, refer to this application as a whole and not to any particular portions of this application. Where the context permits, words in the Detailed Description using the singular or plural number may also include the plural or singular number respectively. The word "or," in reference to a list of two or more items, covers all of the following interpretations of the word: any of the items in the list, all of the items in the list, and any combination of the items in the list.

These and other changes can be made to the technology in light of the following detailed description. While the description describes certain examples of the technology, and describes the best mode contemplated, no matter how detailed the description appears, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the Detailed Description section explicitly defines such terms. Accordingly, the actual scope of the technology encompasses not only the disclosed examples, but also all equivalent ways of practicing or implementing the technology under the claims.

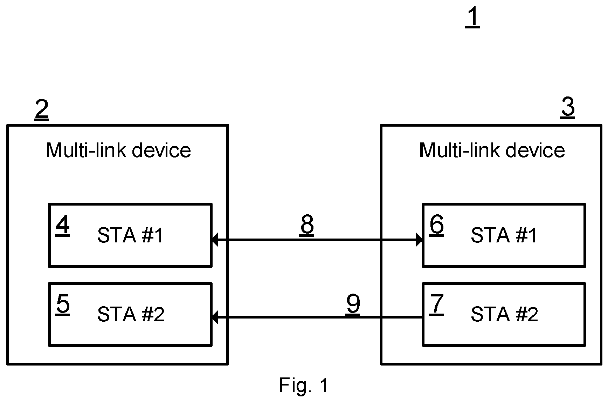

On the basis of Figure 1, several examples of the current disclosure are discussed here below.

One of the insights of the present disclosure is that wide bandwidth may be desirable for wireless sensing because it may provide better resolution which is useful to, for example, separate and identify multi-path components. For example, people standing in a room may give rise to multi-path components in a sensing transmission between a wireless transmitter and a receiver.

Identification of these multi-path components could be used to detect human presence and estimate the number of people in the room. For this reason, multi-link operation may be well suited for wireless sensing, since the addition of links increases the bandwidth used for sensing. However, while it is feasible to setup sensing sessions for each link separately and perform sensing on each link independently, this may waste radio resources due to unnecessary duplication of overhead on each link and does not fully exploit the possibilities for sensing if performed in a coordinated manner among the affiliated STAs in a multi-link device.

The inventors have found a solution in which methods are disclosed to enable STAs affiliated to multi-link devices to setup and execute sensing sessions that are coordinated among the STAs.

The present disclosure is thus directed to a method for performing wireless sensing, wherein both the first multi-link device as well as the second multi-link device, and both wireless links are involved in the sensing.

The scenario 1 shown in Figure 1 comprises two multi-link devices 2, 3. The multi-link devices 2, 3 are deployed in a wireless communication network, for example a Wireless Local Area Network, WLAN, a Bluetooth based network, a Wi-Fi based network, or anything alike. It is noted that the wireless communication network may also encompass an ad-hoc network between the two multi-link devices 2, 3, or an ad-hoc connection between the two multi-link devices 2, 3.

The method is directed to performing sensing measurements during a sensing session between a first multi-link device and a second multi-link device in the wireless communication network, wherein the first multi-link device 2 comprises two stations 4, 5, and wherein the second multi-link device 3 also comprises two stations 6, 7.

The first station 4 of the first multi-link device 2 is arranged to communicate with the first station 6 of the second multi-link device 3 using an independent wireless link 8.

The second station 5 of the first multi-link device 2 is arranged to communicate with the second station 7 of the second multi-link device 3 using another independent wireless link 9.

The wireless links may be different from each other. For example, the first wireless link may be operated in the 2,4 GHz band and the second wireless link may be operated in the 5 GHz or 6 GHz band, or anything alike.

The method comprises the steps of

Determining 8, by the first multi-link device 2, in a sensing session setup, that the second STA 5 of the first multi-link device 2 is to be involved in performing sensing measurement during a sensing session, which determining 2 is performed by exchanging operational attributed using the first STA 4 of the first multi-link device over the first wireless link 8.

It is noted that the multi-link device 2 may comprise higher level operating logic that controls both STAs 4, 5. In such a case, the wireless sensing is coordinated by the multi-link device 2 itself, in that the multi-link device 2 controls the STAs 4, 5. In another example, the STAs 4, 5 may mutually agree on the operating parameters of the wireless sensing. In that case, the logic may, for example, be distributed among the STAs 4, 5 of the multi-link device 2.

The second step of the method comprises performing, by the first multi-link device 2, during a sensing session, wireless sensing using the second STA 5 of the first multi-link device 2 over the second wireless link 9, thereby obtaining sensing measurements.

Examples of operational attributes may include determining the sensing transmitter/receiver, and the type of measurement report. According to one example of the present disclosure, a sensing measurement setup/sensing measurement termination is performed by one STA in each MLD, i.e. over one wireless link.

For example, in the scenario as shown in Figure 1, the first STA 4 of the multi-link device 2 and the first STA 6 of the second multi-link device may be actively involved in the sensing session setup. During the messages exchanged over the first wireless communication link 8, the operational attributes for the sensing session may be agreed upon.

The sensing session may be performed over at least the second wireless communication link 9, such that the second STA 5 of the first multi-link device 2 and the second STA 7 of the second multi-link device 3 are involved.

It is noted that, in accordance with the present disclosure, at least the second STA 5 of the first multi-link device 2 and the second STA 7 of the second multi-link device 3 are involved during the sensing session. On top of that, the first STA 4 of the first multi-link device 2 and the first STA 6 of the second multi-link device 3 may be actively involved as well during the sensing session.

The above entails that the second STA 7 of the second multi-link device 3 may exchange frames with the second STA 5 of the first multi-link device 2, which frames are used for performing the sensing measurements. On top of that, the first STA 6 of the second multi-link device 3 may also exchange frames with the first STA 4 of the first multi-link device 2, which frames are used for performing the sensing measurements.

The frames may be exchanged from the first multi-link device 2 towards the second multi-link device 3, or vice versa. It is further noted that the direction in which the frames are transmitted, i.e. from the second multi-link device 3 to the first multi-link device 2 or vice versa, may not be the same for the first wireless link 8 and the second wireless link 9. As such, the first STA 4 of the first multi-link device may act as a sensing receiver, i.e. receiving the frames from the first STA 6 of the second multi-link device 3 while the second STA 5 of the first multi-link device 2 may act as a transmitted for transmitting the frames to the second STA 7 of the second multi-link device 3, such that the second STA 7 of the second multi-link device 3 acts as the sensing receiver.

On top of the above, the inventors have found that often in wireless communications, the channel can be accurately modelled as reciprocal. That is, the channel, h, between two multi-link devices is the same independent of which one of the two stations is the transmitter and receiver, respectively. As such, there is not absolute need for the STAs of a single multi-link device to both act as a sensing receiver or as a sensing initiator.

In other words, the messages exchanged to initiate or terminate a particular session may include the designation of at least one sensing initiator and at least one sensing responder different from the affiliated STAs performing the transmission and reception of the setup or termination frames.

For example, STA11 and STA12 are affiliated to the first multi-link device 2 and STA21 and STA22 are affiliated to the second multi-link device 3, then STA11 may send a frame to STA21 requesting the setup of a sensing session where STA11 and STA12 are both initiators and STA21, STA22 are both sensing responders.

In another example, STA11 sends a frame to STA21 requesting the setup of a sensing session where only STA12 is the sensing initiator and STA22 is the only sensing receiver. The initiator and responder STAs may be identified by means of their MAC addresses, AIDs or UIDs. In addition, the operational parameters needed to perform the sensing on all links designated for sensing, such as bandwidths, may also be interchanged between STA11 and STA21.

A sensing measurement setup allows a sensing initiator and a sensing responder to agree on operational attributes associated with each measurement instance.

Examples of operational attributes include determining the sensing transmitter/receiver, and the type of measurement report. According to one embodiment of the invention a sensing measurement setup/sensing measurement termination is performed by one STA in each multi-link device, i.e. over one wireless link. The messages exchanged to initiate or terminate the session may include the designation of at least one sensing transmitter and at least one sensing receiver different from the affiliated STAs performing the transmission and reception of the setup or termination frames.

As an example, one wireless link is used for sensing during each measurement interval, for example to avoid devoting too much bandwidth to sensing, but the wireless link used for sensing may be changed from one measurement setup to the next. Since one sensing setup may comprise many measurement setups, the disclosure is advantageous over the prior art solutions because prior art solutions would require one measurement setup per wireless link, whereas with the present disclosure one measurement setup may be valid for multiple wireless links between the first multi-link device 2 and the second multi-link device 3.

When the sensing initiator is different from the sensing receiver, the latter may feedback measurement reports to the initiator. According to one example of the present disclosure, two or more STAs affiliated to one multi-link device are sensing receivers and the measurement reports are aggregated and fed back over one wireless link. This may save overhead since each packet requires its own PHY preamble, MAC header, etc, so that sending only one measurement report eliminates the need to duplicate preambles and headers.

In another example two or more STAs affiliated to a multi-link device are configured to be sensing transmitters and use the synchronized transmission feature introduced to handle non-Simultaneous Transmit and Receive, STR, STAs and transmit simultaneously on two wireless links. In this way a punctured wide bandwidth channel can be synthesized and used for Channel State Information, CSI, estimation.

In another example of the present disclosure, one sensing receiver is comprised in an enhanced Multi-Link Single Radio, eMLSR, device. An eMLSR device is a device that may reconfigure one Multiple Input, Multiple Output, MIMO, radio to simultaneously receive in two different liks. The sensing initiator is affiliated to a multi-link device. During a sensing session or during one measurement setup, the eMLSR can be configured to enable two or more sensing receivers. This allows an initiator to decide whether to trade-off spatial resolution, all RX chains in the same channel, versus multipath-resolving capabilities, i.e. split the RX chains and obtain a larger bandwidth. The eMLSR MLD operation may alternate from one measurement setup to the next.

In another example, the present disclosure may be directed to a method of performing sensing measurements during a sensing session between a first multi-link device and a second multi-link device in a Wireless Communication Network, wherein said first multi-link device comprises two stations, STAs, wherein said second multi-link device comprises two STAs, wherein said STAs are arranged to communicate using independent wireless links such that first STAs of said two multi-link devices are able to communicate over a first wireless link and such that second STAs of said two multi-link devices are able to communicate over a second wireless link, said method comprising the steps of:
- determining, by said first multi-link device, in a sensing session setup, that said second STA of said first multi-link device is to be involved in reporting sensing measurements;
- performing, by said first multi-link device, during a sensing session, wireless sensing using said first STA of said first multi-link device over said first wireless link, thereby obtaining sensing measurements, and
- reporting, by said first multi-link device, said obtained sensing measurements using said second STA of said first multi-link device over said second wireless link.

One of the advantages of the example described above is that the first wireless link does not need to be utilized for reporting the obtained sensing measurements. This would especially be useful in situation in which the first wireless link is fully, or almost fully, utilized.

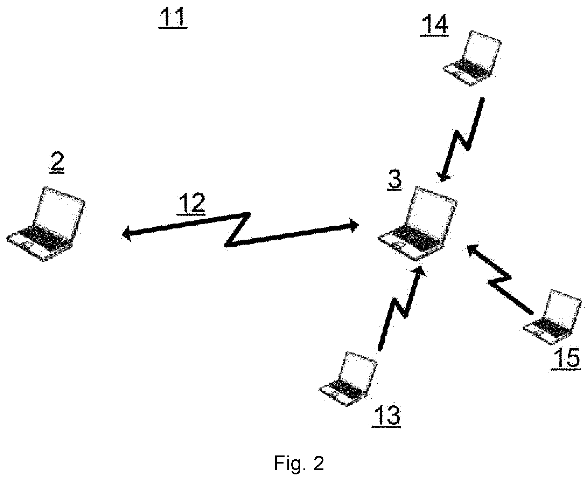

Figure 2 discloses an example 11 of an architecture in accordance with the present disclosure.

The channel is indicated with reference numeral 12. It is shown that the interference that is experienced by the multi-link device 3 may be different to the interference that is experienced by the multi-link device 2. This is because multiple stations 13, 14, 15 are in the vicinity of the multi-link device 3, wherein these multiple stations 13, 14, 15 may contribute to the interference at the multi-link device 3.

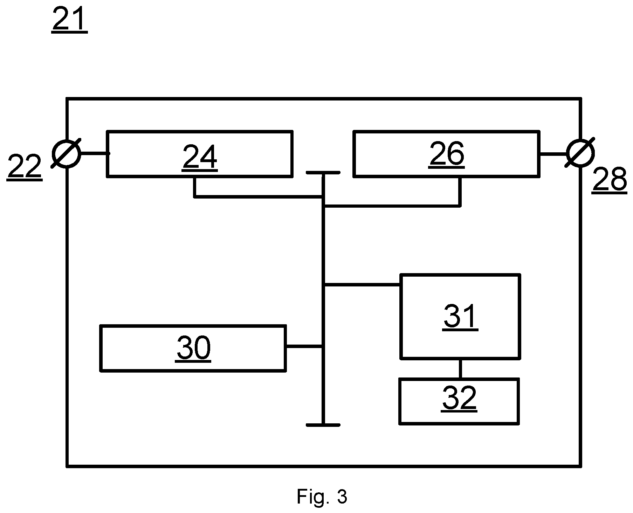

Figure 3 discloses an example of a wireless station in accordance with the present disclosure.

The first multi-link device 21 is arranged for performing sensing measurements during a sensing session between said first multi-link device and a second multi-link device in a Wireless Communication Network, wherein said first multi-link device comprises two stations, STAs, (STA11, STA12), wherein said second multi-link device comprises two STAs (STA21, STA22), wherein said STAs (STA11, STA12, STA21, STA22) are arranged to communicate using independent wireless links such that said first STAs of said two multi-link devices are able to communicate over a first wireless link and such that said second STAs of said two multi-link devices are able to communicate over a second wireless link.

The first multi-link device 21 comprising:
- process equipment 31, that may be coupled to a memory 32, arranged for determining, in a sensing session setup, that a second STA 26 of said first multi-link device is to be involved in performing sensing measurement, via the terminal 28, during a sensing session, which determining is performed by exchanging operational attributes using a first STA 24 of said first multi-link device, via terminal 22, over said first wireless link;
- perform equipment 30 arranged for performing, during a sensing session, wireless sensing using said second STA 22 of said first multi-link device over said second wireless link, thereby obtaining sensing measurements.

To reduce the number of claims, certain aspects of the technology are presented below in certain claim forms, but the applicant contemplates the various aspects of the technology in any number of claim forms. For example, while some aspect of the technology may be recited as a computer-readable medium claim, other aspects may likewise be embodied as a computer-readable medium claim, or in other forms, such as being embodied in a means-plus-function claim.
In the description above, for the purposes of explanation, numerous specific details are set forth in order to provide a thorough understanding of implementations of the disclosed technology. It will be apparent, however, to one skilled in the art that embodiments of the disclosed technology may be practiced without some of these specific details.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope thereof.

## Claims

1. A method of performing sensing measurements during a sensing session between a first multi-link device and a second multi-link device in a Wireless Communication Network, wherein said first multi-link device comprises two stations, STAs, (STA11, STA12), wherein said second multi-link device comprises two STAs (STA21, STA22), wherein said STAs (STA11, STA12, STA21, STA22) are arranged to communicate using independent wireless links such that first STAs of said two multi-link devices are able to communicate over a first wireless link and such that second STAs of said two multi-link devices are able to communicate over a second wireless link, said method comprising the steps of:
- determining, by said first multi-link device, in a sensing session setup over the first wireless link, using the first STA of said first multi-link device, that said second STA of said first multi-link device is to be involved in performing sensing measurement during the sensing session, which determining is performed by exchanging operational attributes using said first STA of said first multi-link device over said first wireless link;
- performing, by said first multi-link device, during said sensing session, wireless sensing using said first and said second STA of said first multi-link device over said first and second wireless link, thereby obtaining sensing measurements.

2. A method in accordance with claim 1, wherein said method comprises the step of:
- transmitting, by said first multi-link device, during said sensing session, frames using said first STA of said first multi-link device over said first wireless link for said first STA of said second multi-link device to perform sensing measurements using said frames.

3. A method in accordance with claim 2, wherein said method comprises the step of:
- receiving, by said first multi-link device, obtained sensing measurements by said second multi-link device, using said first STA of said first multi-link device over said first wireless link.

4. A method in accordance with any of the previous claims, wherein said method comprises the step of:
- reporting, by said first multi-link device, said obtained sensing measurements using said first STA of said first multi-link device over said first wireless link.

5. A method in accordance with claim 1, wherein said step of performing, comprises performing said wireless sensing substantially at the same time.

6. A method in accordance with any of the previous claims, wherein at least one of said first and second multi-link device is a multi-link single radio device.

7. A first multi-link device arranged for performing sensing measurements during a sensing session between said first multi-link device and a second multi-link device in a Wireless Communication Network, wherein said first multi-link device comprises two stations, STAs, (STA11, STA12), wherein said second multi-link device comprises two STAs (STA21, STA22), wherein said STAs (STA11, STA12, STA21, STA22) are arranged to communicate using independent wireless links such that said first STAs of said two multi-link devices are able to communicate over a first wireless link and such that said second STAs of said two multi-link devices are able to communicate over a second wireless link, first multi-link device comprising:
- process equipment arranged for determining, in a sensing session setup over the first wireless link, using the first STA of said first multi-link device, that said second STA of said first multi-link device is to be involved in performing sensing measurement during the sensing session, wherein the process equipment is arranged to perform the determining by exchanging operational attributes using said first STA of said first multi-link device over said first wireless link;
- perform equipment arranged for performing, during said sensing session, wireless sensing using said first and said second STA of said first multi-link device over said first and second wireless link, thereby obtaining sensing measurements.

8. A first multi-link device in accordance with claim 7, wherein said first multi-link device further comprises:
- transmit equipment arranged for transmitting, during said sensing session, frames using said first STA of said first multi-link device over said first wireless link such that said first STA of said second multi-link device is able to perform sensing measurements using said frames.

9. A first multi-link device in accordance with claim 8, wherein said first multi-link device comprises:
- receive equipment arranged for receiving obtained sensing measurements by said second multi-link device, using said first STA of said first multi-link device over said first wireless link.

10. A first multi-link device in accordance with any of the claims 7 - 9, wherein said first multi-link device further comprises:
- report equipment arranged for reporting said obtained sensing measurements using said first STA of said first multi-link device over said first wireless link.

11. A first multi-link device in accordance with claim 7, wherein said perform equipment is arranged for performing said wireless sensing substantially at the same time.

12. A first multi-link device in accordance with any of the claims 7 - 11, wherein said first multi-link device is a multi-link single radio device.

13. A computer program product comprising a computer readable medium having instructions stored thereon which, when executed by a multi-link device, causes said multi-link device to implement a method in accordance with any of the claims 1 - 6.

## Patentansprüche

1. Verfahren zur Durchführung von Erfassungsmessungen während einer Erfassungssitzung zwischen einer ersten Multi-Link-Vorrichtung und einer zweiten Multi-Link-Vorrichtung in einem drahtlosen Kommunikationsnetzwerk, wobei die erste Multi-Link-Vorrichtung zwei Stationen, STAs, (STA11, STA12) umfasst, wobei die zweite Multi-Link-Vorrichtung zwei Stationen, STAs, (STA21, STA22) umfasst, wobei die STAs (STA11, STA12, STA21, STA22) so ausgelegt sind, dass sie unter Verwendung unabhängiger drahtloser Verbindungen kommunizieren, so dass die ersten STAs der zwei Multi-Link-Vorrichtungen in der Lage sind, über eine erste drahtlose Verbindung zu kommunizieren, und so dass die zweiten STAs der zwei Multi-Link-Vorrichtungen in der Lage sind, über eine zweite drahtlose Verbindung zu kommunizieren, wobei das Verfahren die folgenden Schritte umfasst:
- Bestimmen, dass die zweite STA der ersten Multi-Link-Vorrichtung während der Erfassungssitzung an der Durchführung der Erfassungsmessung beteiligt werden soll, durch die erste Multi-Link-Vorrichtung bei einer Erfassungssitzungseinrichtung über die erste drahtlose Verbindung unter Verwendung der ersten STA der ersten Multi-Link-Vorrichtung, wobei das Bestimmen durch Austauschen von Betriebsattributen unter Verwendung der ersten STA der ersten Multi-Link-Vorrichtung über die erste drahtlose Verbindung erfolgt;
- Durchführen drahtloser Erfassung durch die erste Multi-Link-Vorrichtung während der Erfassungssitzung unter Verwendung der ersten und der zweiten STA der ersten Multi-Link-Vorrichtung über die erste und die zweite drahtlose Verbindung, um dadurch Erfassungsmessungen zu erhalten.

2. Verfahren nach Anspruch 1, wobei das Verfahren ferner den folgenden Schritt umfasst:
- Senden von Rahmen durch die erste Multi-Link-Vorrichtung während der Erfassungssitzung unter Verwendung der ersten STA der ersten Multi-Link-Vorrichtung über die erste drahtlose Verbindung, damit die erste STA der zweiten Multi-Link-Vorrichtung Erfassungsmessungen unter Verwendung der Rahmen durchführt.

3. Verfahren nach Anspruch 2, wobei das Verfahren ferner den folgenden Schritt umfasst:
- Empfangen von Erfassungsmessungen, die von der zweiten Multi-Link-Vorrichtung erhalten werden, durch die erste Multi-Link-Vorrichtung unter Verwendung der ersten STA der ersten Multi-Link-Vorrichtung über die erste drahtlose Verbindung.

4. Verfahren nach einem der vorhergehenden Ansprüche, wobei das Verfahren den folgenden Schritt umfasst:
- Melden der erhaltenen Erfassungsmessungen durch die erste Multi-Link-Vorrichtung unter Verwendung der ersten STA der ersten Multi-Link-Vorrichtung über die erste drahtlose Verbindung.

5. Verfahren nach Anspruch 1, wobei der Schritt des Durchführens Durchführen der drahtlosen Erfassung im Wesentlichen zum gleichen Zeitpunkt umfasst.

6. Verfahren nach einem der vorhergehenden Ansprüche, wobei mindestens eine von der ersten und der zweiten Multi-Link-Vorrichtung eine einzelne Multi-Link-Funkvorrichtung ist.

7. Erste Multi-Link-Vorrichtung, die zum Durchführen von Erfassungsmessungen während einer Erfassungssitzung zwischen der ersten Multi-Link-Vorrichtung und einer zweiten Multi-Link-Vorrichtung in einem drahtlosen Kommunikationsnetzwerk ausgelegt ist, wobei die erste Multi-Link-Vorrichtung zwei Stationen, STAs, (STA11, STA12) umfasst, wobei die zweite Multi-Link-Vorrichtung zwei Stationen, STAs, (STA21, STA22) umfasst, wobei die STAs (STA11, STA12, STA21, STA22) so ausgelegt sind, dass sie unter Verwendung unabhängiger drahtloser Verbindungen kommunizieren, so dass die ersten STAs der zwei Multi-Link-Vorrichtungen in der Lage sind, über eine erste drahtlose Verbindung zu kommunizieren, und so dass die zweiten STAs der zwei Multi-Link-Vorrichtungen in der Lage sind, über eine zweite drahtlose Verbindung zu kommunizieren, wobei die erste Multi-Link-Vorrichtung Folgendes umfasst:
- Prozessausrüstung, die so ausgelegt ist, dass sie bei einer Erfassungssitzungseinrichtung über die erste drahtlose Verbindung unter Verwendung der ersten STA der ersten Multi-Link-Vorrichtung bestimmt, dass die zweite STA der ersten Multi-Link-Vorrichtung während der Erfassungssitzung an der Durchführung der Erfassungsmessung beteiligt werden soll, wobei die Prozessausrüstung so ausgelegt ist, dass sie das Bestimmen durch Austauschen von Betriebsattributen unter Verwendung der ersten STA der ersten Multi-Link-Vorrichtung über die erste drahtlose Verbindung durchführt;
- Durchführungsausrüstung, die so ausgelegt ist, dass sie drahtlose Erfassung während der Erfassungssitzung unter Verwendung der ersten und der zweiten STA der ersten Multi-Link-Vorrichtung über die erste und die zweite drahtlose Verbindung durchführt, um dadurch Erfassungsmessungen zu erhalten.

8. Erste Multi-Link-Vorrichtung nach Anspruch 7, wobei die erste Multi-Link-Vorrichtung ferner Folgendes umfasst:
- Sendeausrüstung, die so ausgelegt ist, dass sie Rahmen während der Erfassungssitzung unter Verwendung der ersten STA der ersten Multi-Link-Vorrichtung über die erste drahtlose Verbindung sendet, so dass die erste STA der zweiten Multi-Link-Vorrichtung in der Lage ist, Erfassungsmessungen unter Verwendung der Rahmen durchzuführen.

9. Erste Multi-Link-Vorrichtung nach Anspruch 8, wobei die erste Multi-Link-Vorrichtung Folgendes umfasst:
- Empfangsausrüstung, die so ausgelegt ist, dass sie Erfassungsmessungen, die von der zweiten Multi-Link-Vorrichtung erhalten werden, unter Verwendung der ersten STA der ersten Multi-Link-Vorrichtung über die erste drahtlose Verbindung empfängt.

10. Erste Multi-Link-Vorrichtung nach einem der Ansprüche 7-9, wobei die erste Multi-Link-Vorrichtung ferner Folgendes umfasst:
- Meldeausrüstung, die so ausgelegt ist, dass sie die erhaltenen Erfassungsmessungen unter Verwendung der ersten STA der ersten Multi-Link-Vorrichtung über die erste drahtlose Verbindung meldet.

11. Erste Multi-Link-Vorrichtung nach Anspruch 7, wobei die Durchführungsausrüstung so ausgelegt ist, dass sie die drahtlose Erfassung im Wesentlichen zum gleichen Zeitpunkt durchführt.

12. Erste Multi-Link-Vorrichtung nach einem der Ansprüche 7-11, wobei die erste Multi-Link-Vorrichtung eine einzelne Multi-Link-Funkvorrichtung ist.

13. Computerprogrammprodukt, umfassend ein computerlesbares Medium mit darauf gespeicherten Anweisungen, die bei Ausführung durch eine Multi-Link-Vorrichtung die Multi-Link-Vorrichtung zum Implementieren eines Verfahrens nach einem der die Ansprüche 1-6 veranlassen.

## Revendications

1. Procédé de réalisation de mesures de détection pendant une session de détection entre un premier dispositif à liaisons multiples et un deuxième dispositif à liaisons multiples dans un réseau de communication sans fil, dans lequel ledit premier dispositif à liaisons multiples comprend deux stations, STA, (STA11, STA12), dans lequel ledit deuxième dispositif à liaisons multiples comprend deux STA (STA21, STA22), dans lequel lesdites STA (STA11, STA12, STA21, STA22) sont agencées pour communiquer à l'aide de liaisons sans fil indépendantes de sorte que des premières STA desdits deux dispositifs à liaisons multiples soient aptes à communiquer sur une première liaison sans fil et de sorte que des deuxièmes STA desdits deux dispositifs à liaisons multiples soient aptes à communiquer sur une deuxième liaison sans fil, ledit procédé comprenant les étapes suivantes :
- la détermination, par ledit premier dispositif à liaisons multiples, dans un établissement de session de configuration sur la première liaison sans fil, à l'aide de la première STA dudit premier dispositif à liaisons multiples, que ladite deuxième STA dudit premier dispositif à liaisons multiples doit être impliquée dans la réalisation d'une mesure de détection pendant la session de détection, laquelle détermination est réalisée par l'échange d'attributs opérationnels à l'aide de ladite première STA dudit premier dispositif à liaisons multiples sur ladite première liaison sans fil ;
- la réalisation, par ledit premier dispositif à liaisons multiples, pendant ladite session de détection, d'une détection sans fil à l'aide desdites première et deuxième STA dudit premier dispositif à liaisons multiples sur lesdites première et deuxième liaisons sans fil, obtenant ainsi des mesures de détection.

2. Procédé selon la revendication 1, dans lequel ledit procédé comprend l'étape suivante :
- la transmission, par ledit premier dispositif à liaisons multiples, pendant ladite session de détection, de trames à l'aide de ladite première STA dudit premier dispositif à liaisons multiples sur ladite première liaison sans fil pour que ladite première STA dudit deuxième dispositif à liaisons multiples réalise des mesures de détection à l'aide desdites trames.

3. Procédé selon la revendication 2, dans lequel ledit procédé comprend l'étape suivante :
- la réception, par ledit premier dispositif à liaisons multiples, de mesures de détection obtenues par ledit deuxième dispositif à liaisons multiples, à l'aide de ladite première STA dudit premier dispositif à liaisons multiples sur ladite première liaison sans fil.

4. Procédé selon l'une quelconque des revendications précédentes, dans lequel ledit procédé comprend l'étape suivante :
- le rapport, par ledit premier dispositif à liaisons multiples, desdites mesures de détection obtenues à l'aide de ladite première STA dudit premier dispositif à liaisons multiples sur ladite première liaison sans fil.

5. Procédé selon la revendication 1, dans lequel ladite étape de réalisation comprend la réalisation de ladite détection sans fil sensiblement en même temps.

6. Procédé selon l'une quelconque des revendications précédentes, dans lequel au moins l'un desdits premier et deuxième dispositifs à liaisons multiples est un dispositif radio unique à liaisons multiples.

7. Premier dispositif à liaisons multiples agencé pour réaliser des mesures de détection pendant une session de détection entre ledit premier dispositif à liaisons multiples et un deuxième dispositif à liaisons multiples dans un réseau de communication sans fil, dans lequel ledit premier dispositif à liaisons multiples comprend deux stations, STA, (STA11, STA12), dans lequel ledit deuxième dispositif à liaisons multiples comprend deux STA (STA21, STA22), dans lequel lesdites STA (STA11, STA12, STA21, STA22) sont agencées pour communiquer à l'aide de liaisons sans fil indépendantes de sorte que lesdites premières STA desdits deux dispositifs à liaisons multiples soient aptes à communiquer sur une première liaison sans fil et de sorte que lesdites deuxièmes STA desdits deux dispositifs à liaisons multiples soient aptes à communiquer sur une deuxième liaison sans fil, ledit premier dispositif à liaisons multiples comprenant :
- un équipement de traitement agencé pour la détermination, dans un établissement de session de configuration sur la première liaison sans fil, à l'aide de la première STA dudit premier dispositif à liaisons multiples, que ladite deuxième STA dudit premier dispositif à liaisons multiples doit être impliquée dans la réalisation d'une mesure de détection pendant la session de détection, dans lequel l'équipement de traitement est agencé pour réaliser la détermination par l'échange d'attributs opérationnels à l'aide de ladite première STA dudit premier dispositif à liaisons multiples sur ladite première liaison sans fil ;
- un équipement de réalisation agencé pour la réalisation, pendant ladite session de détection, d'une détection sans fil à l'aide desdites première et deuxième STA dudit premier dispositif à liaisons multiples sur lesdites première et deuxième liaisons sans fil, obtenant ainsi des mesures de détection.

8. Premier dispositif à liaisons multiples selon la revendication 7, dans lequel ledit premier dispositif à liaisons multiples comprend en outre :
- un équipement de transmission agencé pour la transmission, pendant ladite session de détection, de trames à l'aide de ladite première STA dudit premier dispositif à liaisons multiples sur ladite première liaison sans fil de sorte que ladite première STA dudit deuxième dispositif à liaisons multiples soit apte à réaliser des mesures de détection à l'aide desdites trames.

9. Premier dispositif à liaisons multiples selon la revendication 8, dans lequel ledit premier dispositif à liaisons multiples comprend :
- un équipement de réception agencé pour la réception de mesures de détection obtenues par ledit deuxième dispositif à liaisons multiples, à l'aide de ladite première STA dudit premier dispositif à liaisons multiples sur ladite première liaison sans fil.

10. Premier dispositif à liaisons multiples selon l'une quelconque des revendications 7 à 9, dans lequel ledit premier dispositif à liaisons multiples comprend en outre :
- un équipement de rapport agencé pour le rapport desdites mesures de détection obtenues à l'aide de ladite première STA dudit premier dispositif à liaisons multiples sur ladite première liaison sans fil.

11. Premier dispositif à liaisons multiples selon la revendication 7, dans lequel ledit équipement de réalisation est agencé pour la réalisation de ladite détection sans fil sensiblement en même temps.

12. Premier dispositif à liaisons multiples selon l'une quelconque des revendications 7 à 11, dans lequel ledit premier dispositif à liaisons multiples est un dispositif radio unique à liaisons multiples.

13. Produit de programme informatique comprenant un support lisible par ordinateur sur lequel sont stockées des instructions qui, lorsqu'elles sont exécutées par un dispositif à liaisons multiples, amènent ledit dispositif à liaisons multiples à mettre en œuvre un procédé selon l'une quelconque des revendications 1 à 6.
